# EUROPEAN PATENT APPLICATION

(11) **EP 1 492 322 A1**
(43) Date of publication of application: **29.12.2004**
(21) Application number: 03380156.4
(22) Date of filing: 25.06.2003
(51) Int. Cl.: H04M 17/02, H04L 29/06, H04L 12/28

(54) **Method of access to content and services of the Internet with a terminal with resource limitations by means of WAP protocol**

(71) Applicant: Siemens S.A., 28020 Madrid (ES)
(72) Inventor: Lecha Carbo, Antonio, 50016 Zaragoza (ES); Merino Rubio, Antonio, 28020 Madrid (ES); Edelmira, Ana, 28020 Madrid (ES)
(74) Representative: Carpintero Lopez, Francisco

(57) **Abstract**

The present invention consists of a method of access to contents and services of internet by means of a telephone or data terminal (10) with limited resources connected to a fixed network, through the set of WAP protocol specifications. In the method a fixed terminal participates which has a WML language browser, and has the whole WAP technology protocol stack implemented which allows it access through a remote WAP Proxy (8) of Internet contents. An HTML filter (11) allows the contents stored in HTML to be translated to WML format. The purpose of the method object of the invention is to achieve that low-cost fixed terminals, like for example public telephones have an added value by enabling them to access contents and services of Internet at reduced cost.

## Description

### FIELD OF APPLICATION

This invention describes a method of access to Internet contents and services by means of a telephone or data terminal with resource limitation connected to a fixed network, through the WAP protocol set of specifications.

The WAP protocol is that conventionally employed in cellular telephony for access to Internet services and contents, since its specifications adapt to the bandwidth restrictions in the radio channel and to the processing capability limitations in the terminal as well as in the display screens in said cellular terminals.

### STATE OF THE ART

Access is known to Internet services and contents from fixed terminals such as computers via the HTTP and TCP/IP protocols. The main drawback consists in providing an access to Internet contents and services with a satisfactory level of working speed and design complexity of the fixed terminals, when these fixed terminals have limited inherent resources.

The use of the WAP protocol is also known for access to Internet contents and services from cellular terminals, this protocol being much simpler to handle and implement in comparison with the HTTP protocol.

Data transfer in HTML language for fixed terminals, through among others of the HTTP and TCP/IP protocol stack, requires the use of an application program called "Browser", which allows visualization of the contents and services and interpretation of the HTML language.

The correct interpretation of the HTML language requires a great quantity of resources in the terminal and in the interconnection network to the service provider.

This is the system employed for fixed terminals such as computers, which are characterised by a high processing capability, memory capacity of storage and processing, and physical size of the display screen.

Other dedicated and not generic fixed terminals also exist like the computers, but always as a common denominator, is their complexity.

The limitation in this solution arises when the fixed terminals do not have sufficient inherent resources.

Data transfer in WML language for cellular terminals, through among others the WAP protocol stack, requires the use of an application program called "MicroBrowser", which allows visualization of the contents and services and interpretation of the WML language.

The WAP protocol is specially designed for access to Internet contents and services in cellular terminals with limited resources, characterised especially by the low data transfer rate available and by the very reduced size of the display screens.

The resource limitation also arises from the radio access network itself, like for example GSM and UMTS, wherein the maximum data transfer rate available is very much less than in systems with wired access.

The use is not known of WAP technology in non-cellular terminals in the state of the art, since it is specifically designed to be employed in cellular networks with transmission via radio and not for wired networks.

### DESCRIPTION OF THE INVENTION

The object of the present invention is to provide a method of access to Internet contents and services using WAP protocol, from a fixed telephone or data terminal with limited resources connected to a fixed network.

In the method participates a fixed terminal which has a browser that interprets contents in WML language, called microbrowser due to its greater simplicity in comparison with HTML browsers. The WML browser allows access to Internet contents and services, and is an essential part of the fixed terminal. In comparison with other HTML browsers, it has the advantage of not requiring so many resources in the terminal, and the drawback of its limitation as to graphics resolution, language limitation and other multimedia characteristics.

Said fixed terminal has the entire WAP technology protocol stack implemented, which will allow access through a remote WAP Proxy to Internet contents stored in a WML server. For access to Internet contents stored in HTML servers, it is necessary to have access through an HTML filter which allows the contents stored in HTML to be translated into WML format. This translation process will be accompanied in general with a loss of information and other non-essential parts of the multimedia contents, since the WML language is much simpler but in turn more restricted than the HTML language.

The fixed terminal also has the necessary low-level protocols implemented for connection to the wired fixed network.

All these protocols also allow access to the Internet service provider ISP, which has various functions, among which, the ISP serves as a bridge between networks interconnecting the wired network and the Internet. Also, an ISP permits or denies access to a fixed terminal, and therefore serves to provide a link with said fixed terminal over the wired network and with the HTML contents servers through the Internet network. For this purpose, it uses the PPP protocol with the fixed terminal, in which transaction, among others, the tasks will be carried out of link configuration, terminal authentication, allocation of a dynamic IP address that the terminal will use while the connection lasts, and the configuration of the network IP protocol to be used.

With this it is achieved that low-cost terminals, as is the case with value-added public telephones, can have access to Internet contents and services at reduced cost, taking advantage of the higher access speed and the better reliability of communication, all this in comparison with other fixed or mobile terminals.

The method object of the invention allows terminals with limited facilities connected to fixed networks that require connection to the Internet, to be provided with an added value, management and/or maintenance. Examples of these terminals are: public telephone terminal connected through PSTN or ISDN with access to WML contents (yellow pages, news, stock market, duty chemists, etc.), domotic networks connected through the electricity distribution mains, and dispensing machines for drinks, foodstuffs or cigarettes also connected through the electricity distribution mains.

The precise description of the ambit of this invention is defined in the section on claims.

### BRIEF DESCRIPTION OF FIGURES

Figure 1 shows the architecture of a traditional network employed for access to Internet from fixed terminals via the HTTP protocol.
Figure 2 shows the architecture of a traditional network employed for access to internet from cellular terminals via the WAP protocol.
Figure 3 shows the network architecture employed for access to Internet from fixed terminals via the WAP protocol.
Figure 4 shows the schematic of protocol layers for access to Internet from fixed terminals with WAP technology.
Figure 5 show schematically the functionality of the WAP proxy.

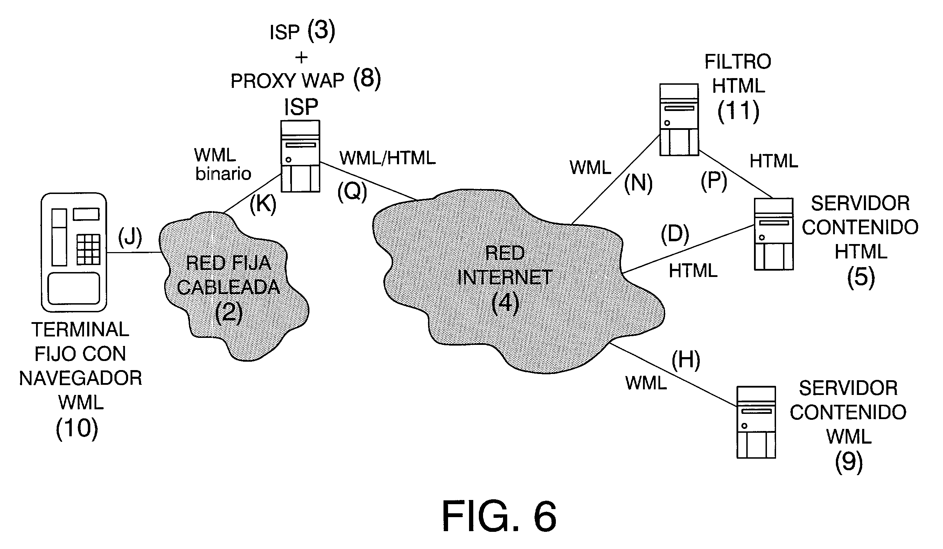

Figure 6 shows the network architecture used for access to Internet from fixed terminals via the WAP protocol when it is carried out through an ISP-Proxy-WAP.

### DETAILED DESCRIPTION OF THE INVENTION

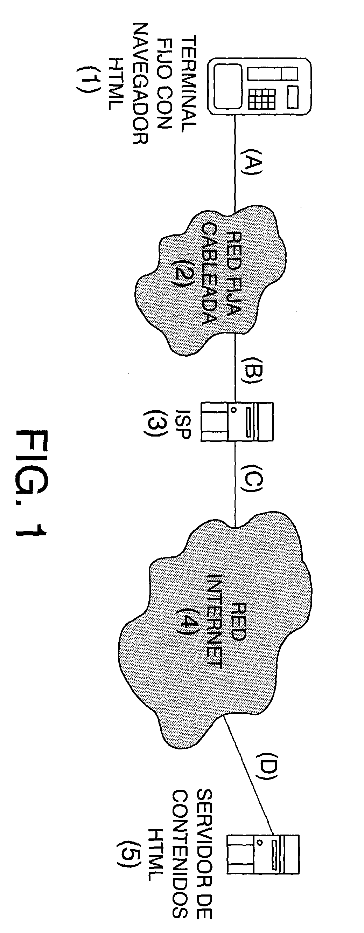

Figure 1 shows the entities involved in the traditional network architecture employed for access to Internet from fixed terminals via the HTTP protocol, known from the current state of the art: fixed terminal with HTML browser (1), analogue or digital wired fixed network (2) (e.g. PSTN, ISDN), Internet service provider ISP (3), Internet network (4) and HTML contents server (5).

The fixed terminal (1) will have an HTML language browser, which has the function of displaying and interpreting the contents available in HTML language. Habitually, this fixed terminal (1) is a personal computer or work station, which has processing capacity, storage, display screen size and other characteristics which permit the correct operation and facilities of the HTML browser.

This fixed terminal (1) will be connected to any wired access network (2), like for example the public switched telephone network, PSTN or ISDN. This wired network has the function of transporting data between provider terminations and other receivers.

The Internet service provider ISP (3) has various functions, among which is to serve as the bridge between networks interconnecting the wired network and the Internet network. Also, an ISP (3) allows or denies access to a fixed terminal (1), and is therefore in charge of providing a link with said fixed terminal (1) through the wired network (2) and with the HTML contents servers (5) through the Internet network (4). For this it uses the PPP protocol with the fixed terminal in which transaction, among others, the tasks will be carried out of link configuration, terminal authentication, allocation of a dynamic IP address that the terminal will use while the connection lasts, and configuration of the network IP protocol to be used.

The Internet network (4) interconnects and serves as transport for all the elements, receivers or servers of Internet contents (5). It is characterised in the allocation of IP addresses which identify univocally each of the elements connected to the Internet network. This network is of the packet type, wherein there is no pre-established physical and fixed connection between two points, but instead the data streams are encapsulated in relatively small data packets transported between the terminations not necessarily over the same physical channels.

The HTML contents server (5) allows direct access to all the Internet contents in HTML format.

In figure 1 the letters A through D denote the interfaces between the various elements. These interfaces are:
A- Interface between the fixed terminal (1) which contains the HTML browser and the wired network (2), analogue or digital. Via this interface the data information will be transported in HTML language which is capable of correctly interpreting the HTML browser, using the HTTP, TCP/IP protocols to do so.
B- Interface between the wired network (2), and the Internet service provider ISP (3). The data information in HTML language is transported through this interface via HTTP, TCP/IP.
C- Interface between the Internet service provider ISP (3) and the Internet network (4). The data information is transported in HTML language and the web HTTP, TCP/IP protocol stack.
D- Interface between the Internet network (4) and the HTML contents server (5). The HTML format is used in the information transported in this interface and the web HTTP, TCP/IP protocol stack.

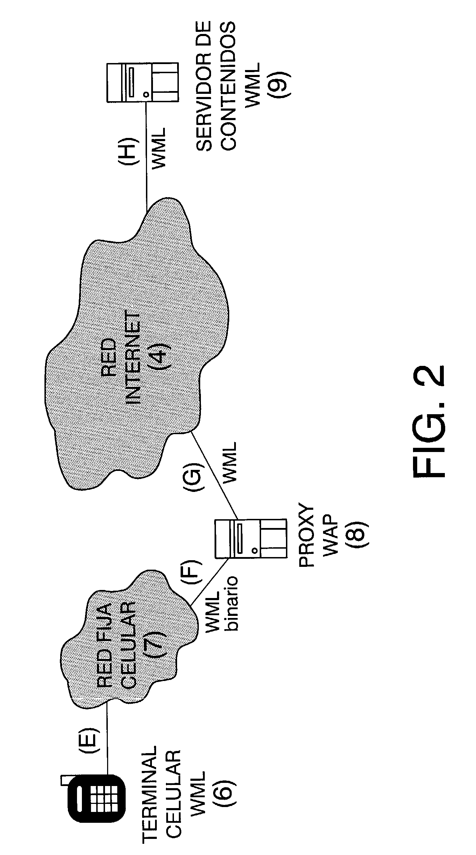

Figure 2 shows the entities involved in the traditional network architecture employed for access to Internet from cellular terminals via the WAP protocol, known from the current state of the art: cellular terminal with WML browser (6), digital cellular network (7) (e.g. GSM), WAP Proxy (8), Internet network (4) and WML contents Server (9).

The cellular terminal (6) will have a WML language browser, which has the function of displaying and interpreting the contents available in WML language. Habitually, this cellular terminal (6) is a cellular telephone or PDA with radio access, which has processing capacity, storage, display screen size and other characteristics which permit the correct operation and facilities of the WML browser. In comparison with the fixed terminals mentioned in figure 1, said facilities are much more limited, for which reason access by means of HTML is totally inefficient and not technologically viable in said cellular terminals.

This cellular terminal (6) will be connected to a cellular network (7), as is the case of GSM. The communication of the cellular terminal (6) with said cellular network (7) is carried out in binary WML language. This cellular network (6) has the function of transporting data between provider terminations and other receivers. In addition, the actual elements that constitute the cellular network, already distinguish access permits of the cellular terminals (6), and the type of services requested, like for example access to WML contents.

The requests for Internet contents are carried out through WAP Proxy (8). WAP Proxy (8) will translate the requests in binary WML format to WML. In fact, WAP Proxy (8) carries out all the translation tasks necessary between the cellular terminal (6) and the contents servers (9).

The WML contents server (9) allows direct access to all contents already available in WML format.

The Internet network (4) interconnects and serves as transport for all the elements, receivers or servers of Internet contents (9). It is characterised by the allocation of IP addresses that identify univocally each of the elements connected to the Internet network. This network is of the packet type, wherein there is no pre-established physical and fixed connection between two points, but instead the data streams are encapsulated in relatively small data packets transported between the terminations not necessarily over the same physical channels.

The WML contents server (9) allows direct access to all Internet contents in WML format.

In figure 2, the letters E through H denote the interfaces between the various elements. These interfaces are:
E- Interface between the cellular terminal (6), which contains the WML microbrowser browser and the digital cellular network (7). Via this interface the data information will be transported in binary WML language which is capable of correctly interpreting the WML microbrowser browser, through the WAP protocol stack.
F- Interface between the cellular network (7) and WAP Proxy (8). The data information in binary WML language is transported via this interface, through the WAP protocol stack.
G- Interface between WAP Proxy (8) and the Internet network (4). The data information is transported in WML language, and the web protocol stack (HTTP and TCP/IP).
H- Interface between the Internet network (4) and the WML contents server (9). The WML format is used in the information transported in this interface, through the web protocol stack (HTTP and TCP/IP).

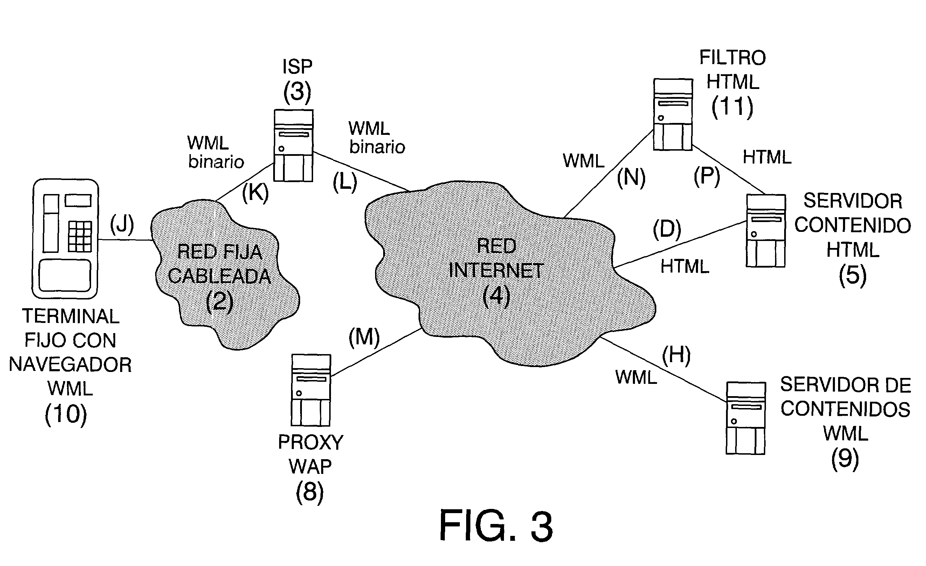

Figure 3 shows the entities involved in the method of access to Internet contents and services from a fixed terminal with limited facilities or resources: fixed terminal with WML browser (10), analogue or digital wired network (2) (e.g. PSTN, ISDN), Internet service provider ISP (3), internet network (4), WAP Proxy (8), WML contents server (9), HTML contents server (5), and HTML filter (11) to WML contents. This figure shows the preferred network architecture object of this invention.

The fixed terminal (10) will have a browser in WML microbrowser language, which has the function of displaying and interpreting the contents available in WML language. This browser can be supported on fixed terminals of the telephone type with added value and limited resources.

This fixed terminal (10) will be connected to any wired access network (2), like for example the public switched telephone network PSTN or ISDN. This wired network has the function of transporting data between provider terminations and other receivers.

The Internet service provider ISP (3) has various functions, among which is to serve as the bridge between networks interconnecting the wired network and the Internet network. Also, an ISP allows or denies access to a terminal, and is therefore in charge of providing a link with said fixed terminal over the wired network and with the rest of the Internet network. For this it uses the PPP protocol with the fixed terminal, in the transaction of which, among others, the tasks will be carried out of link configuration, terminal authentication, allocation of a dynamic IP address that the terminal will use while the connection lasts, and configuration of the network IP protocol to be used.

The Internet network (4) interconnects and serves as transport for all the elements, receivers or servers of Internet contents. It is characterised by the allocation of IP addresses which identify univocally each of the elements connected to the Internet network. This network is of the packet type, wherein there is no pre-established physical and fixed connection between two points, but instead the data streams are encapsulated in relatively small data packets transported between the terminations not necessarily over the same physical channels.

The requests for internet contents are carried out through WAP Proxy (8). This happens once the fixed terminal (10) has obtained the IP address from its ISP, and at that moment already has a connection to Internet similar to that which any computer would have using HTML. The WAP Proxy (8) will translate the requests in binary WML format to WML, and the request in WSP format of the WAP protocol to Internet HTTP format. In fact, WAP Proxy (8) carries out all the translation tasks necessary between the fixed terminal (10) and the contents servers.

The WML contents server (9) allows direct access to all contents already available in WML format. Those available only in HTML format in the HTML contents server (5) have to be previously translated to WML format by means of the HTML filter (11).

The HTML contents server (5) allows direct access to all Internet contents in HTML format, which are not capable of being directly interpreted by the WML browser.

The HTML filter (11) carries out the translation of contents in HTML format to WML. As WML is a simpler format than HTML, since it is designed for terminals with more limited facilities, the loss is unavoidable of functional complexity, resolution of images, and other items of information not essential in simpler terminals.

In figure 3, the identifying letters are shown on each of the interfaces between the various entities. These interfaces are:
J- Interface between the fixed terminal (10), which contains the WML browser and the wired network (2), analogue or digital. Via this interface the data information will be transported in binary WML language, which the WML browser is capable of interpreting. In this interface the WAP protocol stack on IP networks is used.
K- Interface between the wired network (2) and the Internet service provider ISP (3). The data information in binary WML language is transported through this interface via the WAP protocol stack.
L- Interface between the Internet service provider ISP (3) and the Internet network (4). The data information is transported in binary WML language via the WAP protocol stack on IP networks.
M- Interface between the Internet network (4) and WAP Proxy (8). The connection with the ISP (3), through the Internet network (4), transports data information in binary WML language via WAP protocol stack on IP networks, while the connection with the WML contents server (9), or with the HTML filter (11), transports information in WML language via HTTP and TCP/IP.
H- Interface between the Internet network (4) and the WML contents server (9). This interface transports information in WML format via HTTP and TCP/IP.
D- Interface between the Internet network (4) and the HTML contents server (5). The HTML format is used in the information transported in this interface via HTTP and TCP/IP.
N- Interface between the Internet network (4) and the HTML filter (11). This interface will transport information in WML format via HTTP and TCP/IP.
P- Interface between the HTML filter (11), and the HTML contents server (5). This interface will transport information in HTML format via HTTP and TCP/IP.

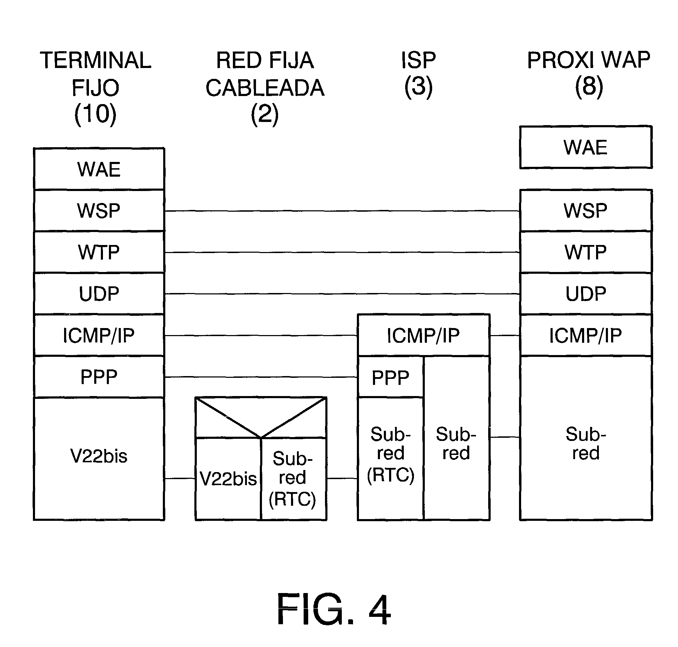

Figure 4 shows the layers of the protocols implicated in the logic communication between the different elements of the invention described in figure 3. Those elements implicated in the connection are included from the fixed terminal (10) and WAP Proxy (8).

It is possible to employ any physical layer protocol that works on the wired network. In figure 4, V22bis is shown, used for low-consumption terminals in public telephone networks fed electrically from the telephone network itself.

The fixed terminal (10) will be connected to the ISP (3) over a point to point connection via the PPP link protocol, in which transaction the tasks will be carried out, among others, of link configuration, terminal authentication (there are various authentication protocols), obtaining a dynamic IP address that the terminal will use while the connection lasts, and the configuration of the IP protocol as network protocol to be used.

On the PPP link protocol, the fixed terminal (10) will implement the IP packaging and IP address protocol.

UDP is the transport protocol used in the WAP standard on IP networks, which is much simpler to use and implement than TCP, which is used in conventional terminals that employ HTML language. The communication security furnished by TCP does not exist in UDP, for which reason this protection is provided by the higher protocols of the WAP stack.

The WAP protocol stack is implemented in the fixed terminal (10) and in the WAP proxy (8), which comprises, as well as UD, the WTP, WSP and WAE protocols. Optionally, WTLS is included for applications that require secure connections.

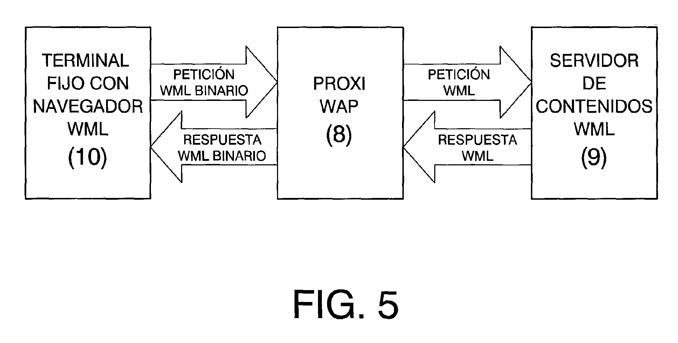

Figure 5 shows schematically the function of the WAP proxy (8). To access Internet contents, the standardized naming model is used based on URLs, employed both in HTTP and in WAP. The requests are launched by the fixed terminal (10), in binary WML format to the IP address of the WAP proxy (8), which is known beforehand by the terminal (e.g. as a programmable parameter). These requests reach the proxy WAP (8) with no problem, independently of their geographical location, which translates the contained binary WML to WML, launching this request in WML format to the WML contents server (9), or indirectly to the HTML contents server (5), through the HTML filter (11). The responses in WML format are again translated to binary WML in the WAP proxy (8), before being sent to the fixed terminal (10).

Figure 5 shows an alternative to the scheme proposed in figure 3. In this case, the service provider ISP (3) and the WAP proxy (8), are physically in the same engine. The main advantage of this new configuration is speed of connection with the WAP Proxy (8), and the additional security achieved by being connected to the fixed terminal (10) by means of a point to point connection.

Moreover, the HTML filter (11) could also be physically located in this same engine.

### DEFINITIONS AND ABBREVIATIONS

CDMACode Division Multiple Access. Technology used in cellular telephony of the latest generation, used as the base in the UMTS standard.
GSM Global System Mobile. System of cellular telephony based on TDMA technology.
HTML Hypertext Mark-up Language. Language or set of syntactic rules used by the HTTP protocol.
HTTP Hypertext Transfer Protocol. Application protocol employed in Internet for the transfer of contents, which defines rules for the transfer of text, images, audio, video and other multimedia files.
INTERNET International network for the transfer of multimedia data packets.
IP Internet Protocol. Connection protocol to the Internet network.
ISP Internet Service Provider.
BROWSER Application tool specially designed for access to contents of the Internet network: texts, images, audio, video and other multimedia content.
PPP Point to Point Protocol.
PROXY Buffer element in charge of re-addressing the traffic between the supported terminals and the contents servers, for more simplicity in managing the terminals. It also carries out translation of the different languages used in the terminals and in the servers.
ISDN Integrated Services. Digital Network. Digital switched telephony system characterised by the availability of data transmission channels at 64 kilobits per second.
PSTN Public Switched Telephone Network. Traditional system of switched analogue telephony, characterised by the transmission of information in the voice band.
TCP Transmission Control Protocol. Interconnection protocol to IP that allows the transmission of data packets of with a certain level of protection against errors. It is used by HTTP as transport protocol.
TDMATime Division Multiple Access. Technology used in GSM cellular telephony.
UDP User Datagram Protocol. Interconnection protocol to IP that allows the transparent transmission of data packets without any type of protection against errors, for which reason it is much faster in comparison with TCP. It is used by WAP as transport protocol.
UMTS Universal Mobile Telephony System. System of cellular telephony of the latest generation which uses CDMA technology.
WAE Wireless Application Environment. Interconnection protocol with the application that uses WAP technology.
WAP Wireless Application Protocol. Access protocol to Internet contents for mobile or wireless devices.
WML Wireless Mark-up Language. Language or group of syntactic rules used by the WAP protocol.
WSP Wireless Session Protocol Layer. Session protocol defined in the WAP protocol stack.
WTLS Wireless Transport Layer Security. Security protocol employed in WAP technology.
WTP Wireless Transaction Protocol Layer. Data transaction protocol defined in the WAP protocol stack.

## Claims

1. Method of access to contents and services of Internet, **characterised in that** it is enabled so that a telephone or data terminal with limited resources connected to a fixed network, can access the contents and services of Internet by the use of the WAP protocol.

2. Method of access to contents and services of Internet according to claim 1, **characterised in that** it uses a WML language browser for access to the services and contents offered from the servers connected to the Internet network.

3. Method of access to contents and services of Internet according to claim 1, **characterised in that** it uses the low-level protocols of fixed networks for the connection of the WAP protocols to the wired network.

4. Method of access to contents and services of Internet according to claims 1 to 3, **characterised in that** this method provides for the physical connection of the fixed terminal to an analogue or digital wired network.

5. Method of access to contents and services of Internet according to claims 1 to 4, **characterised in that** this method provides for the connection of said terminal with the Internet service provider ISP over the analogue or digital wired network.

6. Method of access to contents and services of Internet according to claims 1 to 5, **characterised in that** it provides for the access of said terminal to a WAP Proxy server.

7. Method of access to contents and services of Internet according to claims 1 to 6, **characterised in that** it provides for the remote access of said terminal to the contents and services of a WML server through a WAP Proxy server.

8. Method of access to contents and services of Internet according to claims 1 to 6, **characterised in that** it provides for the remote access of said terminal to the contents and services of an HTML server through a WAP Proxy server and of an HTML filter translating from HTML to WML.

9. Method of access to contents and services of Internet according to claims 1 to 4, **characterised in that** it provides for the connection of said terminal over the analogue or digital wired network with the Internet service provider ISP which includes the actual ISP functionality and WAP proxy server jointly.

10. Method of access to contents and services of Internet according to claims 1 to 4, **characterised in that** the connection is provided for said terminal over the analogue or digital wired network with the Internet service provider ISP which includes the actual ISP functionality, WAP proxy server and HTML filter jointly.
